# EUROPÄISCHE PATENTSCHRIFT

(11) **EP 4 299 420 B1**
(45) Veröffentlichungstag und Bekanntmachung des Hinweises auf die Patenterteilung: **25.11.2026**
(21) Anmeldenummer: 22382629.8
(22) Anmeldetag: 01.07.2022
(51) Int. Cl.: B62D 21/11, B62D 21/00

(54) **HILFSRAHMEN FÜR EIN FAHRZEUG, INSBESONDERE ELEKTROFAHRZEUG**
AUXILIARY FRAME FOR A VEHICLE, IN PARTICULAR AN ELECTRIC VEHICLE
CHÂSSIS AUXILIAIRE POUR UN VÉHICULE, EN PARTICULIER VÉHICULE ÉLECTRIQUE

(43) Veröffentlichungstag der Anmeldung: 03.01.2024
(73) Patentinhaber: Autotech Engineering S.L., 48340 Amorebieta-Etxano (ES)
(72) Erfinder: Friesen, Viktor, 33647 Bielefeld (DE); Geßner, Denis, 33649 Bielefeld (DE)
(74) Vertreter: Cohausz & Florack

(56) Entgegenhaltungen:
- EP-A1- 2 902 303
- EP-B1- 3 434 562
- WO-A1-2022/064116
- WO-A1-2022/073818
- DE-A1- 102013 108 695

## Beschreibung

Die Erfindung betrifft einen Hilfsrahmen, insbesondere Vorderachs-Hilfsrahmen, für ein Fahrzeug, insbesondere ein Elektrofahrzeug, mit einem ersten Schalenelement und einem zweiten Schalenelement, das mit dem ersten Schalenelement starr verbunden ist und mit demselben einen Hohlraum definiert.

Derartige Hilfsrahmen, auch als Achsträger bezeichnet, sind in vielen Ausführungen bekannt (vgl. z.B. DE-A1-10 2012 021 562 und DE-A1-10 2012 111 461). Sie sollen bei hoher Festigkeit und Steifigkeit möglichst leicht sein und weisen üblicherweise Lenkeranbindungen (Lageraufnahmen) für Radführungselemente und andere Aggregate auf, um als Vormontageeinheit den Einbau kompletter Vorder- oder Hinterachsmodule mit Antriebseinheiten zu ermöglichen.

Elektromotoren von Elektrofahrzeugen können ihr maximales Drehmoment bereits im Stillstand des Fahrzeugs abgeben und brauchen daher, anders als ein Fahrzeugantrieb mit Verbrennungsmotor, in der Regel kein Schaltgetriebe. Die hohen Anfahrdrehmomente von Elektrofahrzeugen erfordern besonders stabil ausgelegte Hilfsrahmenkonstruktionen, an denen die Elektromotoren beispielsweise mittels einer Querbrücke befestigt werden. Würden wie bei herkömmlichen Hilfsrahmen für Fahrzeuge mit Verbrennungsmotor Blechschalenelemente des Hilfsrahmens, beispielsweise Oberschalen, mit üblichen Blechdicken von z.B. ca. 2,2 mm verbaut werden, so würde es aufgrund zu großer Biegespannungen im Bereich der Querbrückenanbindung zum Versagen des Hilfsrahmens kommen. Um ein solches Bauteilversagen auszuschließen, ist es aus Praxis bekannt, die Blechdicke der Blechschalen, insbesondere der Oberschalen, zu erhöhen. Der dadurch erhöhte Materialeinsatz führt jedoch zu einer erheblichen Gewichtszunahme des Hilfsrahmens.

Aufgrund der relativ geringen Energiedichte, die eine wiederaufladbare Traktionsbatterie (Akkumulator) gegenüber einem kraftstoffgefüllten Tank bietet, sind Elektrofahrzeuge in der Regel deutlich schwerer als entsprechende Fahrzeuge mit Verbrennungsmotor. Hohe Fahrzeuggewichte ergeben hohe effektive und dynamische Achslasten, die wiederum zu einem erhöhten Fahrwerksverschleiß führen.

Die EP-B1-3 434 562 offenbart einen Hilfsrahmen, insbesondere für ein Elektrofahrzeug, mit einem ersten Schalenelement und einem zweiten Schalenelement, das mit dem ersten Schalenelement starr verbunden ist und mit demselben einen Hohlraum definiert. Des Weiteren umfasst der Hilfsrahmen eine Querbrücke zur Lagerung eines Fahrzeugantriebsaggregates, insbesondere eines Fahrzeugantriebsmotors oder Getriebes, die durch eine Schraubverbindung mit dem ersten Schalenelement und dem zweiten Schalenelement verbunden ist, und ein hülsenartiges Distanzelement zum Durchstecken einer Schraube zur Karosserieanbindung, wobei das Distanzelement an einem seiner Enden an einem Durchgangsloch des ersten Schalenelements angeordnet ist und sich innerhalb des Hohlraums in Richtung eines Durchgangslochs des zweiten Schalenelements erstreckt. Damit ein solcher Hilfsrahmen bei gleichbleibendem oder nur wenig erhöhtem Gewicht eine deutlich höhere Stabilität, insbesondere höhere Biegefestigkeit besitzt, wird in der EP-B1-3 434 562 vorgeschlagen, dass das Distanzelement einen hülsenartigen Abschnitt zur Aufnahme einer Schraube der Schraubverbindung der Querbrücke aufweist. Das Distanzelement ist dabei vorzugsweise schlaufenförmig ausgebildet.

Der in der EP-B1-3 434 562 offenbarte Hilfsrahmen hat sich in der Praxis gut bewährt. Versuche haben jedoch ergeben, dass bei Belastung des Hilfsrahmens durch dynamische Achslasten mitunter hohe Spannungen im Bereich der Karosserieanbindung und/oder der Querbrückenanbindung auftreten, die an Schweißnähten, welche ein hülsenartiges Distanzelement mit den Schalenelementen verbinden, in ungünstigen Fällen zu einem Versagen der Schweißnähte führen können.

Die WO 2022/064116 A1 offenbart einen Hilfsrahmen für ein Fahrzeug, der eine untere Schale, eine obere Schale und einen Abstandshalter umfasst, wobei die untere Schale an der oberen Schale befestigt ist, um einen Hohlraum zu begrenzen, wobei der Abstandshalter zwischen den beiden Schalen positioniert ist. Der Hilfsrahmen ist geeignet, an dem Abstandshalter eine Abstützung für Aufhängungselemente oder Elemente zur Befestigung eines Motors zu bilden. Die untere Schale weist eine in den Hohlraum hineinragende Halterung zur Befestigung des Hilfsrahmens an der Fahrzeugstruktur auf. Des Weiteren weist der Hilfsrahmen ein Verstärkungselement auf, das in dem Hohlraum positioniert ist. Das Verstärkungselement ist an der unteren Schale an der Kante der Halterung zur Befestigung des Hilfsrahmens befestigt ist und umfasst eine Öffnung, in der der Abstandshalter positioniert ist. Das Verstärkungselement ist als separat gefertigtes Bauelement durch eine Blechplatte gebildet und durch Schweißpunkte an der unteren Schale befestigt.

Die EP-A1-2 902 303 offenbart einen Hilfsrahmen für ein Kraftfahrzeug, mit einem ersten Schalenelement und einem zweiten Schalenelement, das mit dem ersten Schalenelement starr verbunden ist und mit demselben einen Hohlraum definiert. Der Hilfsrahmen ist mit wenigstens einer Karosserieanbindungshülse zum Durchstecken einer Schraube versehen, wobei die Karosserieanbindungshülse an einem ihrer Enden an einem Durchgangsloch des ersten Schalenelements festgelegt ist und sich innerhalb des Hohlraums in Richtung eines Durchgangslochs des zweiten Schalenelements erstreckt. Um eine hohe Sicherheit gegen Verrutschen relativ zur Karosserie zu erreichen, ist dem festgelegten Ende der Karosserieanbindungshülse eine ringfömige Scheibe zugeordnet, die radial gegenüber der Hülsenmantelfläche vorsteht, außenseitig des ersten Schalenelements angeordnet und stoffschlüssig mit demselben verbunden ist, wobei an dem Durchgangsloch des zweiten Schalenelements, dem das andere Ende der Karosserieanbindungshülse zugewandt ist, außenseitig eine von der Karosserieanbindungshülse separat gefertigte Zahnscheibe angeordnet ist, deren Außendurchmesser größer als der Innendurchmesser des Durchgangslochs des zweiten Schalenelements ist und die stoffschlüssig mit dem zweiten Schalenelement verbunden ist.

Davon ausgehend liegt der vorliegenden Erfindung die Aufgabe zugrunde, einen Hilfsrahmen der eingangs genannten Art zu schaffen, der bei geringerem oder nur wenig erhöhtem Gewicht eine höhere Stabilität, insbesondere eine verbesserte Sicherheit gegen Versagen von Schweißnähten an der Karosserieanbindung und/oder einer Bauteilanbindung, z. B. Querbrückenanbindung, bietet.

Diese Aufgabe wird durch einen Hilfsrahmen mit den in Anspruch 1 angegebenen Merkmalen gelöst. Vorteilhafte Ausgestaltungen des erfindungsgemäßen Hilfsrahmens sind in den Unteransprüchen angegeben.

Der erfindungsgemäße Hilfsrahmen ist aus mindestens zwei Schalenelementen zusammengesetzt. Er umfasst insbesondere ein erstes Schalenelement und ein zweites Schalenelement, das mit dem ersten Schalenelement starr verbunden ist und mit demselben einen Hohlraum definiert. Mindestens eines der Schalenelemente weist eine Seitenwand auf, die als Außenwand des Hilfsrahmens mit dem anderen Schalenelement oder einem anderen der Schalenelemente stoffschlüssig verbunden ist. Des Weiteren umfasst der Hilfsrahmen mindestens ein buchsen- oder hülsenartiges Distanzelement zum Durchstecken eines Befestigungsbolzens, vorzugsweise Schraubbolzens, zur Karosserie- oder Bauteilanbindung. Das Distanzelement ist dabei an einem seiner Enden an einem Durchgangsloch des ersten Schalenelements angeordnet und erstreckt sich innerhalb des Hohlraums in Richtung eines Durchgangslochs des zweiten Schalenelements. Bei der Bauteilanbindung kann es sich beispielsweise um eine Querbrückenanbindung, um eine Getriebebrückenanbindung oder um eine Anbindung eines Lenkgetriebegehäuses handeln. Erfindungsgemäß ist der Hilfsrahmen dadurch gekennzeichnet, dass die Seitenwand des Schalenelements mindestens eine Lasche aufweist, die mit dem buchsen- oder hülsenartigen Distanzelement verschweißt ist.

Das Distanzelement stellt eine Verstärkung des Hilfsrahmens dar. Es kann daher auch als buchsen- oder hülsenartiges Verstärkungselement bezeichnet werden. Ferner kann das Distanzelement auch einfach als Hülse oder Buchse bezeichnet werden.

Dadurch, dass die Seitenwand des Schalenelements, die als Außenwand des Hilfsrahmens mit dem anderen Schalenelement oder einem anderen der Schalenelemente stoffschlüssig verbunden ist, mindestens eine Lasche aufweist, die mit dem buchsen- oder hülsenartigen Distanzelement verschweißt ist, lässt sich ein zusätzlicher Lastpfad in einer Richtung parallel zur Längsmittelachse des Distanzelements implementieren, der eine höhere Stabilität, insbesondere eine verbesserte Sicherheit gegen Versagen von Schweißnähten an der Karosserieanbindung und/oder Bauteilanbindung bietet. Da die Lasche hierzu in einer ohnehin vorgesehenen oder regelmäßig erforderlichen Seitenwand eines der Schalenelemente integriert werden kann, lässt sich der zusätzliche Lastpfad ohne einen zuvor separat hergestellten Verstärkungssteg verwirklichen. Die Integration der Lasche in einer Seitenwand eines der Schalenelemente, vorzugsweise einer Oberschale, ermöglicht eine optimierte Nutzung des Materials der Schalenelemente und damit eine Gewichtseinsparung.

Der erfindungsgemäße Hilfsrahmen zeichnet sich somit bei geringerem oder nur wenig erhöhtem Gewicht durch eine verbesserte Sicherheit gegen Versagen von Schweißnähten an der Karosserieanbindung und/oder Bauteilanbindung aus.

Die Schalenelemente des Hilfsrahmens sind vorzugsweise aus Blech, beispielsweise aus Stahlblech hergestellt. Blech, insbesondere Stahlblech, bietet bei relativ geringen Materialkosten sehr gute Festigkeitseigenschaften. Es lässt sich in komplexe Geometrien umformen und ist auch gut schneidbar sowie schweißbar. Vorteilhaft können das erste Schalenelement und/oder das zweite Schalenelement des Hilfsrahmens aus höherfestem oder presshärtbarem Stahlblech, beispielsweise aus Mangan-Bor-Stahl, hergestellt sein. Solches Stahlblech zeichnet sich bei geringem Gewicht durch eine besonders hohe Biegefestigkeit sowie Zugfestigkeit aus.

Vorzugsweise weisen das erste Schalenelement und das zweite Schalenelement des Hilfsrahmens eine unterschiedliche Blechdicke und/oder eine unterschiedliche Stahlzusammensetzung auf. Sofern der Hilfsrahmen eine Querbrücke aufweist, hat das die Querbrücke unmittelbar aufnehmende (tragende) Schalenelement beispielsweise eine geringere Blechdicke als das damit starr verbundene andere Schalenelement.

Eine weitere vorteilhafte Ausgestaltung der Erfindung sieht vor, dass das die Lasche aufweisende Schalenelement eine Oberschale des Hilfsrahmens ist. Diese Ausgestaltung ist in fertigungstechnischer Hinsicht vorteilhaft. Insbesondere bietet diese Ausgestaltung den Vorteil, die Anzahl der Schalenelemente als separat hergestellte Einzelteile zur Ausführung des Hilfsrahmens relativ gering zu halten. Dementsprechend kann die Anzahl der notwendigen Schweißverbindungen, insbesondere Schweißnähte, zur Verbindung der Schalenelemente gering gehalten werden.

Nach einer weiteren vorteilhaften Ausgestaltung der Erfindung weist das die Lasche aufweisende Schalenelement eine weitere Seitenwand auf, die über einen Steg mit der die Lasche aufweisenden Seitenwand einstückig, d.h. in einem Stück, verbunden ist, wobei die beiden Seitenwände mit dem Steg einen im Querschnitt U-förmigen Schalenabschnitt definieren. Hierdurch lässt sich bei vorgegebenem oder reduziertem Gewicht die Stabilität, insbesondere die Biegefestigkeit des betreffenden Schalenelements und damit des Hilfsrahmens erhöhen.

In diesem Zusammenhang sieht eine weitere Ausgestaltung der Erfindung vor, dass der die Seitenwände miteinander verbindende Steg des Schalenelements eine fensterartige Aussparung aufweist, wobei die Aussparung eine lichte Größe aufweist, die größer ist als die Außenseitenfläche der Lasche. Vorzugsweise beträgt die lichte Größe der Aussparung mindestens das 1,5-fache, besonders bevorzugt mindestens das 2-fache der Außenseitenfläche der Lasche. Durch diese Aussparung lässt sich das Gewicht des betreffenden Schalenelements und damit des Hilfsrahmens erheblich reduzieren, während die mit dem Distanzelement verschweißte Lasche eine höhere Stabilität, insbesondere eine verbesserte Sicherheit gegen Versagen von Schweißnähten an der Karosserieanbindung und/oder Bauteilanbindung bietet.

Eine weitere vorteilhafte Ausgestaltung der Erfindung ist dadurch gekennzeichnet, dass der Hilfsrahmen mindestens zwei buchsen- oder hülsenartige Distanzelemente aufweist, wobei eines der Distanzelemente zum Durchstecken eines Befestigungsbolzens, vorzugsweise Schraubbolzens, zur Karosserieanbindung bestimmt ist, während ein anderes der Distanzelemente zum Durchstecken eines Befestigungsbolzens, vorzugsweise Schraubbolzens, zur Bauteilanbindung, beispielsweise einer Querbrückenanbindung oder einer Getriebebrückenanbindung, bestimmt ist, und wobei die Seitenwand des Schalenelements mindestens zwei Laschen aufweist, von denen eine Lasche mit dem Distanzelement der Karosserieanbindung und eine andere der Laschen mit dem Distanzelement der Bauteilanbindung verschweißt sind. Durch die mindestens zwei Laschen lassen sich mindestens zwei zusätzliche Lastpfade in Richtung parallel zur Längsmittelachse des jeweiligen Distanzelements verwirklichen. Damit lässt sich sowohl an der Karosserieanbindung als auch an der Bauteilanbindung die Sicherheit gegen Versagen dortiger Schweißnähte verbessern.

Nach einer weiteren vorteilhaften Ausgestaltung der Erfindung ist die jeweilige Lasche durch eine im Wesentlichen parallel zu einer Längsmittelachse des buchsen- oder hülsenartigen Distanzelements verlaufende Schweißnaht, vorzugsweise Kehlnaht, mit dem betreffenden Distanzelement verschweißt, wobei die Längsmittelachse des Distanzelements im montierten Zustand des Hilfsrahmens vorzugsweise im Wesentlichen parallel zur Hochachse (z-Achse) des Hilfsrahmens verläuft. Eine solche Schweißnaht lässt sich fertigungstechnisch relativ einfach verwirklichen und verringert erheblich die Belastung einer Schweißnaht, die am Kopf des für die Karosserieanbindung oder Bauteilanbindung bestimmten Distanzelements ausgeführt ist oder wird.

Für eine deutliche Entlastung der Schweißnaht am Kopf des für die Karosserieanbindung oder Bauteilanbindung bestimmten Distanzelements ist es vorteilhaft, wenn sich nach einer weiteren Ausgestaltung der Erfindung die Schweißverbindung zwischen der Lasche und dem Distanzelement über eine axiale Länge des Distanzelements erstreckt, die im Bereich von 20 bis 95%, vorzugsweise im Bereich von 50 bis 95%, besonders bevorzugt im Bereich von 60 bis 90% des am Distanzelement gemessenen Abstandes der Schalenelemente voneinander liegt.

Eine weitere vorteilhafte Ausgestaltung der Erfindung sieht vor, dass das Distanzelement und die daran angeschweißte Lasche zueinander im Schrägstoß angeordnet sind. Die die Lasche und das Distanzelement miteinander verbindende Schweißnaht kann in diesem Fall relativ einfach an der einen stumpfen Winkel definierenden Kehle der zu verschweißenden Elemente verwirklicht werden. Eine solche Kehle dürfte in den meisten Fällen für einen Schweißkopf gut zugänglich sein.

Das mindestens eine buchsen- oder hülsenartige Distanzelement des erfindungsgemäßen Hilfsrahmens kann auf verschiedene Weise mit mindestens einem der Schalenelemente verbunden sein. Eine vorteilhafte Ausgestaltung der Erfindung sieht hierzu vor, dass das mindestens eine Distanzelement durch eine Steckverbindung oder Klemmverbindung und/oder durch eine endseitige oder stirnseitige Schweißverbindung mit mindestens einem der Schalenelemente verbunden ist.

Insbesondere in fertigungstechnischer Hinsicht ist es vorteilhaft, wenn nach einer bevorzugten Ausgestaltung der Erfindung die jeweilige Lasche einstückig mit der Seitenwand des Schalenelements ausgebildet ist.

Nach einer weiteren Ausgestaltung der Erfindung ist die jeweilige Lasche relativ zu einer von der Seitenwand des Schalenelements definierten Außenfläche oder Tangentialebene einwärts in Richtung des mit ihm verschweißten Distanzelements gebogen.

Eine weitere vorteilhafte Ausgestaltung der Erfindung sieht vor, dass die Lasche über einen Biegebereich in die Seitenwand übergeht, wobei in der Seitenwand und/oder an der Lasche mindestens ein Freischnitt vorhanden ist, der sich über den Biegebereich hinaus in die Seitenwand erstreckt. Diese Ausgestaltung ermöglicht einen hohen Freiheitsgrad für die Formgebung der Lasche und stellt eine hohe Belastungsstabilität der Lasche insbesondere an ihrem Übergang in die Seitenwand sicher.

Nach einer weiteren Ausgestaltung der Erfindung ist zwischen der Lasche des einen Schalenelements und dem anderen Schalenelement eine Aussparung ausgebildet, die sich bis zu dem mit dem Distanzelement verschweißten Ende der Lasche erstreckt. Durch diese Aussparung lässt sich eine Schweißnahtanhäufung an dem Distanzelement vermeiden. Da beim Schweißen infolge von Schrumpfungen Eigenspannungen entstehen, ist es für eine hohe Schweißnahtqualität vorteilhaft, eine Schweißnahtanhäufung zu vermeiden. Des Weiteren lassen sich durch diese Ausgestaltung im Bereich der Karosserie- oder Bauteilanbindung Schmutz- und/oder Feuchtigkeitsnester vermeiden. In diesem Zusammenhang ist eine bevorzugte Ausgestaltung dadurch gekennzeichnet, dass sich die Aussparung ausgehend von dem mit dem Distanzelement verschweißten Ende der Lasche bis zum Biegebereich der Lasche oder über den Biegebereich der Lasche hinaus in die Seitenwand erstreckt.

Eine weitere vorteilhafte Ausgestaltung der Erfindung sieht vor, dass das Distanzelement einen durchmessererweiterten Kopf in Form einer Lochscheibe, vorzugsweise Zahnscheibe, aufweist, wobei der Kopf mit dem Distanzelement einstückig ausgebildet ist. Hierdurch wird die Montage des Distanzelements vereinfacht. Insbesondere ist es vorteilhaft, wenn der Kopf des Distanzelements gemäß einer weiteren Ausgestaltung mit dem betreffenden Schalenelement direkt verschweißt ist. Hierdurch wird die Verstärkungswirkung des Distanzelements optimiert, insbesondere wenn die Schweißverbindung zwischen dem Kopf des Distanzelements und dem Schalenelement als ringförmige oder im Wesentlichen als umlaufende Schweißnaht ausgeführt wird. Durch die Ausbildung des Kopfes des Distanzelements in Form einer Zahnscheibe lässt sich in vorteilhafter Weise eine rutschsichere Anbindung des Hilfsrahmens an die Karosserie sicherstellen, ohne das Bauteilgewicht der Karosserieanbindung übermäßig zu erhöhen. Die Zahnstruktur (Verzahnung) der Zahnscheibe erhöht den Reibwert zwischen dem Hilfsrahmen und der angebundenem Karosserie und trägt damit zur rutschsicheren Anbindung des Hilfsrahmens bei.

Eine bevorzugte Ausgestaltung der Erfindung ist dadurch gekennzeichnet, dass das erste Schalenelement eine erste Seitenwand aufweist und dass das zweite Schalenelement eine zweite Seitenwand aufweist, wobei die erste Seitenwand mit dem zweiten Schalenelement stoffschlüssig verbunden ist und die zweite Seitenwand mit dem ersten Schalenelement stoffschlüssig verbunden ist. Eine derartige Ausgestaltung kann zu verbesserten mechanischen Eigenschaften des Hilfsrahmens beitragen.

Vorzugsweise sind die erste und die zweite Seitenwand insbesondere als Außenwand des Hilfsrahmens ausgebildet, wobei sowohl eine erste Lasche der ersten Seitenwand des ersten Schalenelements als auch eine zweite Lasche der zweiten Seitenwand des zweiten Schalenelements mit einem Distanzelement, vorzugsweise mit demselben Distanzelement, verschweißt sind. Dies hat sich insbesondere bei der Verwendung von langen Distanzelementen als vorteilhaft erwiesen.

Nachfolgend wird die Erfindung anhand einer mehrere Ausführungsbeispiele darstellenden Zeichnung näher erläutert. Es zeigen:
- Fig. 1: einen Abschnitt eines Hilfsrahmens für ein Fahrzeug, insbesondere Elektrofahrzeug, in einer perspektivischen Darstellung;
- Fig. 2: einen Teilabschnitt des Hilfsrahmens aus Fig. 1, in vergrößerter perspektivischer Darstellung; und
- Fig. 3: einen Teilabschnitt eines Hilfsrahmens für ein Fahrzeug, insbesondere Elektrofahrzeug, ähnlich dem Teilabschnitt in Fig. 2, jedoch gemäß einem weiteren Ausführungsbeispiel, in perspektivischer Darstellung.

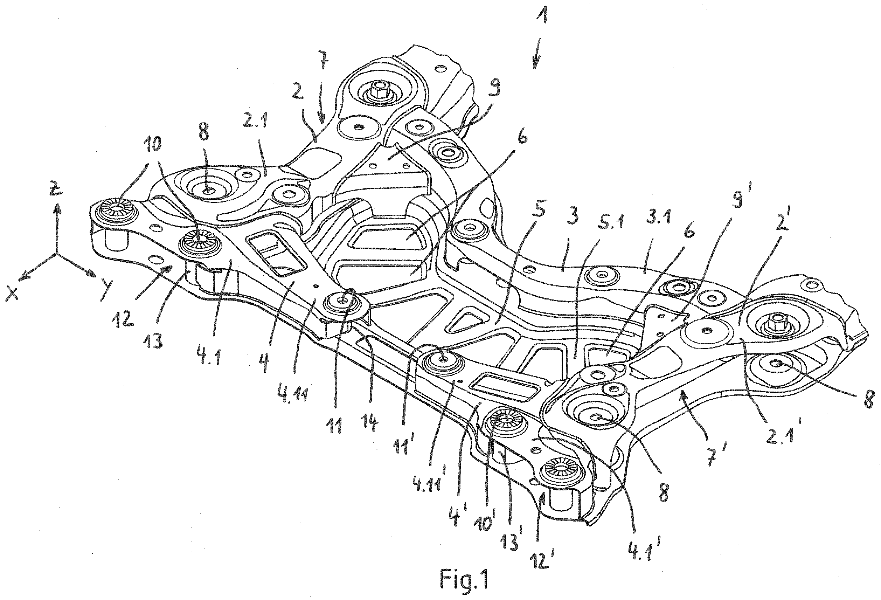

In Fig. 1 ist ein Abschnitt eines Hilfsrahmens 1 für ein Fahrzeug, insbesondere Elektrofahrzeug gezeigt. Der Hilfsrahmen 1, der hier zum Beispiel als Vorderachs-Hilfsrahmen ausgeführt ist, ist aus Längsträgern 2, 2' und Querträgern 3, 4, 4' zusammengesetzt. Unter dem Begriff "Längsträger" werden hier Tragelemente oder Abschnitte von Tragelementen des Hilfsrahmens 1 verstanden, die sich im montierten Zustand des Hilfsrahmens 1 im Wesentlichen entlang der Längsachse des betreffenden Kraftfahrzeuges erstrecken. Die Querträger 3, 4, 4' erstrecken sich dagegen im montierten Zustand des Hilfsrahmens 1 im Wesentlichen horizontal und quer zu der Längsachse des Kraftfahrzeuges.

In Fig. 1 sind hintere Abschnitte zweier Längsträger 2, 2' und ein die Längsträger miteinander verbindender Querträger 3 gezeigt. Die Längsträger 2, 2' und die Querträger 3, 4, 4' sind aus Schalenelementen, und zwar aus Blechschalen gebildet. Der Hilfsrahmen 1 ist beispielsweise aus einem unteren Schalenelement 5 und mehreren oberen Schalenelementen 2.1, 2.1', 3.1, 4.1, 4.1' aufgebaut. Das untere Schalenelement 5 kann auch als Unterschale oder Hauptschale bezeichnet werden. Es umfasst einen Aussparungen 6 aufweisenden Schalenbereich 5.1, der beispielsweise als Lenkungsschutz fungieren kann. Auf dem unteren Schalenelement 5 sind mehrere obere Schalenelemente 2.1, 2.1', 3.1, 4.1, 4.1' angeordnet, die mit dem unteren Schalenelement 5 und teilweise untereinander verschweißt sind. Die oberen Schalenelemente 2.1, 2.1', 3.1, 4.1, 4.1' können auch als Oberschalen bezeichnet werden. Die Schalenelemente 2.1, 2.1', 3.1, 4.1, 4.1', 5 sind vorzugsweise aus Stahlblech hergestellt und weisen vorzugsweise unterschiedliche Blechdicken und/oder unterschiedliche Materialgüten, insbesondere Streckgrenzen und Zugfestigkeiten auf. So kann beispielsweise das obere Schalenelement (Oberschale) 4.1, 4.1' eine geringere Blechdicke aufweisen als das untere Schalenelement 5.

Das untere Schalenelement 5 und die damit verschweißten oberen Schalenelemente 2.1, 2.1' der Längsträger 2 und 2' definieren eine linke Aufnahme 7 und eine rechte Aufnahme 7' zur Anbindung von (hier nicht gezeigten) Fahrwerkslenkern (Querlenkern). Die Anbindung der Fahrwerkslenker erfolgt mittels Schraubverbindungen. Hierzu sind in den Schalenelementen 2.1, 2.1' und 5 Anbindungslöcher 8 für Schraubbolzen ausgebildet. In von den Schalenelementen 2.1, 2.1', 3.1 der Längsträger 2, 2' und des Querträgers 3 begrenzten Eckbereichen sind Verstärkungsbleche 9 und 9' eingeschweißt, die im Querschnitt betrachtet beispielsweise im Wesentlichen winkelförmig ausgebildet sind.

An den karosserieseitigen Enden der oberen Längsträger-Schalenelemente 2.1, 2.1' sind zusätzliche obere Schalenelemente (Oberschalen) 4.1, 4.1' angesetzt, die Durchgangslöcher 10, 10' zur Aufnahme von Schrauben zur Anbindung des Hilfsrahmens 1 an die Karosserie des betreffenden Fahrzeuges aufweisen. Des Weiteren können diese oberen Schalenelemente 4.1, 4.1' jeweils einen Abschnitt 4.11, 4.11' aufweisen, der sich ausgehend von der Innenseite des Längsträgers 2, 2' über ein bestimmtes Maß quer nach innen erstreckt. Die oberen Schalenelemente 4.1, 4.1' bzw. die Abschnitte 4.11, 4.11' enden mit Abstand zueinander. An den einander zugewandten Enden der Schalenelemente 4.1, 4.1' bzw. Abschnitte 4.11, 4.11' sind Durchgangslöcher 11, 11' zur Aufnahme von Schrauben zur Anbindung eines Bauteils, beispielsweise einer Querbrücke des Hilfsrahmens, ausgebildet. Die Querbrücke (nicht gezeigt) kann der Lagerung eines Fahrzeugantriebsaggregats, beispielsweise eines Elektromotors dienen. Alternativ kann an den Durchgangslöchern 11, 11' aber auch ein anderes Bauteil, beispielsweise ein Lenkgetriebegehäuse, ein Verbrennungsmotor oder ein mit einem Antriebsaggregat zu koppelndes Getriebe, gelagert werden.

Der Hilfsrahmen 1 weist somit in einem Abschnitt, welcher der Anbindung an die Karosserie des Fahrzeuges und/oder der Anbindung eines Bauteils, beispielsweise einer Querbrücke, dient, ein erstes Schalenelement 4.1, 4.1' und mindestens ein zweites Schalenelement 5 auf, das mit dem ersten Schalenelement 4.1, 4.1' starr verbunden, vorzugsweise verschweißt ist und mit demselben einen Hohlraum 12, 12' definiert. Die Durchgangslöcher 10, 10', 11, 11' der Schalenelemente 4.1, 4.1' sind jeweils mit einem buchsen- oder hülsenartigen Distanzelement 13, 13', 14 versehen, in das ein Befestigungsbolzen (nicht gezeigt), vorzugsweise Schraubbolzen, zur Karosserie- bzw. Bauteilanbindung einsteckbar ist. Das Distanzelement 13, 13', 14 ist dabei an einem seiner Enden an einem Durchgangsloch 10, 10', 11, 11' des ersten Schalenelements 4.1, 4.1' angeordnet und erstreckt sich innerhalb des Hohlraums 12, 12' in Richtung eines Durchgangslochs des zweiten Schalenelements 5.

Das Distanzelement 13, 13', 14 ist durch eine Steck- oder Klemmverbindung sowie durch eine endseitige oder stirnseitige Schweißverbindung 16, 17 mit mindestens einem der Schalenelemente 4.1, 4.1' oder 5 verbunden. Das Distanzelement 13, 13', 14 ist mit einem durchmessererweiterten Kopf 13.1, 14.1 in Form einer Lochscheibe versehen. Vorzugsweise ist der Kopf 13.1, 14.1 mit dem Distanzelement 13, 14 einstückig ausgebildet. Die der Karosserieanbindung zugeordnete Lochscheibe 13.1 ist vorzugsweise als Zahnscheibe ausgebildet. Der Kopf 13.1, 14.1 des Distanzelements 13, 14 bzw. die Lochscheibe 13.1, 14.1 ist mit der Oberseite des Schalenelements 4.1 verschweißt. Vorzugsweise ist diese Schweißverbindung 16, 17 als eine im Wesentlichen umlaufende Schweißnaht 16, 17 entlang des Umfangs der Lochscheibe 14.1 bzw. Zahnscheibe 13.1 ausgeführt.

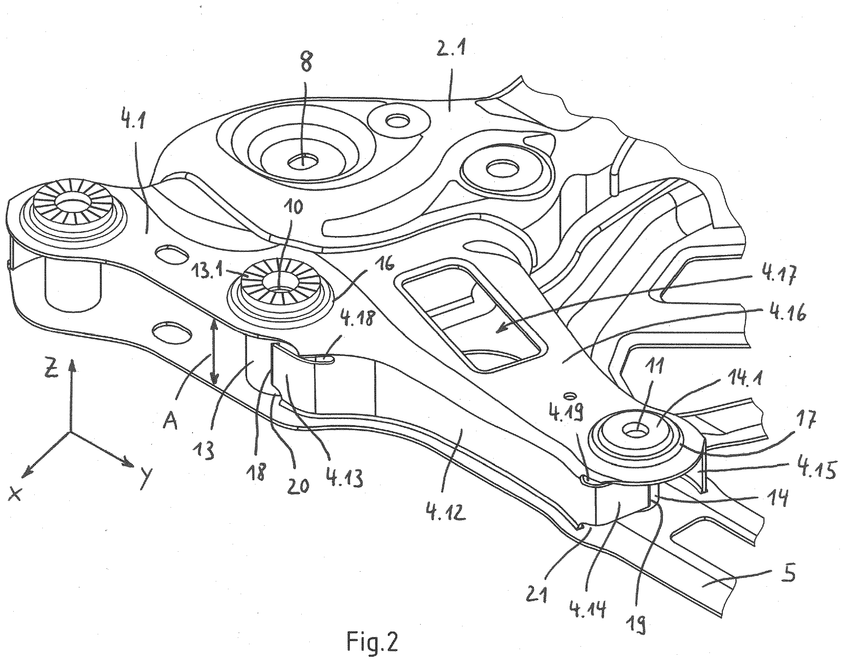

Des Weiteren zeigen die Figuren 1 und 2, dass mindestens eines der Schalenelemente, vorzugsweise die Oberschale 4.1, eine Seitenwand 4.12 aufweist, die als Außenwand des Hilfsrahmens 1 mit dem anderen Schalenelement 5 verschweißt ist. Erfindungsgemäß weist die Seitenwand 4.12 mindestens eine Lasche 4.13, 4.14 auf, die mit einem der Distanzelemente 13, 14 verschweißt ist. Durch diese Schweißverbindung 18, 19, die vorzugsweise als im Wesentlichen axiale Schweißnaht 18, 19 entlang des buchsen- oder hülsenartigen Distanzelements 13, 14 ausgeführt ist, entsteht ein zusätzlicher Lastpfad in Richtung der Längsmittelachse des Distanzelements 13, 14. Die Lasche 4.13, 4.14 ist dabei vorzugsweise einstückig mit der Seitenwand 4.12 des betreffenden Schalenelements 4.1 ausgebildet.

Das Schalenelement (Oberschale) 4.1 hat eine weitere Seitenwand 4.15, die über einen Steg 4.16 mit der die Lasche/n 4.13, 4.14 aufweisenden Seitenwand 4.12 einstückig verbunden ist (vgl. Fig. 2). Die beiden Seitenwände 4.12, 4.15 definieren mit dem Steg 4.16 einen im Querschnitt U-förmigen Schalenabschnitt. Der die Seitenwände 4.12, 4.15 verbindende Steg 4.16 hat eine fensterartige Aussparung 4.17. Die Aussparung 4.17 besitzt eine lichte Größe, die größer ist als die Außenseitenfläche der Lasche 4.13 oder 4.14. Beispielsweise beträgt die lichte Größe der Aussparung 4.17 mindestens das 1,5-fache, vorzugsweise mindestens das 2-fache der Außenseitenfläche der Lasche 4.13 oder 4.14.

Die Lasche 4.13, 4.14 ist relativ zu einer von der Seitenwand 4.12 definierten Außenfläche oder Tangentialebene einwärts in Richtung des mit ihm verschweißten Distanzelements 13 oder 14 gebogen. Die Lasche 4.13, 4.14 geht über einen Biegebereich in die Seitenwand 4.12 über, wobei in der Seitenwand 4.12 bzw. an der Lasche 13, 14 mindestens ein Freischnitt 4.18, 4.19 ausgebildet ist, der sich über den Biegebereich hinaus in die Seitenwand 4.12 erstreckt. Des Weiteren sind das Distanzelement 13, 14 und die daran angeschweißte Lasche 4.13, 4.14 zueinander im Schrägstoß angeordnet.

Die Lasche 4.13, 4.14 ist vorzugsweise durch eine im Wesentlichen parallel zur Längsmittelachse des buchsen- oder hülsenartigen Distanzelements 13, 14 verlaufende Schweißnaht 18, 19, vorzugsweise eine Kehlnaht, mit dem betreffenden Distanzelement 13, 14 verschweißt. Die Längsmittelachse des Distanzelements 13, 14 verläuft im montierten Zustand des Hilfsrahmens 1 vorzugsweise im Wesentlichen parallel zur Hochachse (z-Achse) des Hilfsrahmens 1.

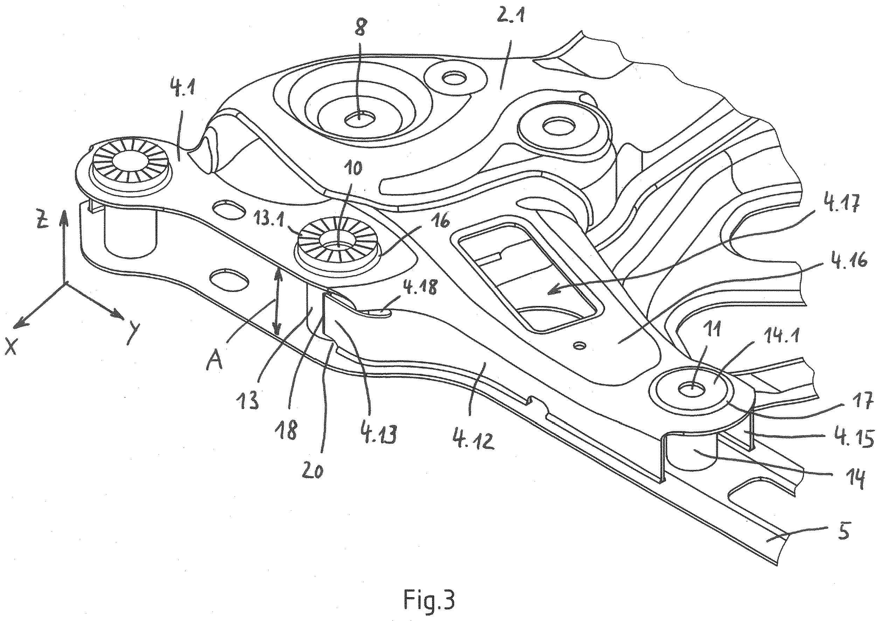

Die Länge der Schweißnaht 18, 19 zwischen Lasche 4.13, 4.14 und Distanzelement 13, 14 ist so bemessen, dass sich die Schweißnaht 18 oder 19 über eine axiale Länge des Distanzelements 13, 14 erstreckt, die beispielsweise im Bereich von 50 bis 95%, vorzugsweise im Bereich von 60 bis 90% des am Distanzelement 13, 14 gemessenen Abstandes A der Schalenelemente 4.1 und 5 voneinander liegt (vgl. Figuren 2 und 3).

In dem in den Figuren 1 und 2 dargestellten Ausführungsbeispiel weist der Hilfsrahmen 1 mindestens zwei buchsen- oder hülsenartige Distanzelemente 13, 14 auf, wobei eines der Distanzelemente (13) zum Durchstecken eines Befestigungsbolzens, vorzugsweise Schraubbolzens, zur Karosserieanbindung bestimmt ist, während ein anderes der Distanzelemente (14) zum Durchstecken eines Befestigungsbolzens, vorzugsweise Schraubbolzens, zur Bauteilanbindung, beispielsweise einer Querbrückenanbindung oder einer Getriebebrückenanbindung, bestimmt ist. Die äußere Seitenwand 4.12 der Oberschale 4.1 weist vorzugsweise mindestens zwei Laschen 4.13, 4.14 auf, von denen eine Lasche (4.13) mit dem Distanzelement 13 der Karosserieanbindung und eine andere der Laschen (4.14) mit dem Distanzelement 14 der Bauteilanbindung verschweißt sind. Durch diese Schweißverbindungen, die vorzugsweise als im Wesentlichen axiale Schweißnähte 18, 19 entlang der Distanzelemente 13, 14 ausgeführt sind, entstehen zwei zusätzliche Lastpfade parallel zu den Längsmittelachsen der Distanzelemente 13, 14.

Des Weiteren ist gezeigt, dass zwischen der Lasche 4.13, 4.14 des Schalenelements 4.1 und dem Schalenelement 5 eine Aussparung 20, 21 ausgebildet ist, die sich bis zu dem mit dem Distanzelement 13, 14 verschweißten Ende der Lasche 4.13, 4.14 erstreckt. Die Aussparung 21 kann sich ausgehend von dem mit dem Distanzelement 14 verschweißten Ende der Lasche 4.14 bis zum Biegebereich der Lasche 4.14 oder über den Biegebereich der Lasche 4.14 hinaus in die Seitenwand 4.12 des Schalenelements 4.1 erstrecken.

Das in Fig. 3 dargestellte Ausführungsbeispiel des erfindungsgemäßen Hilfsrahmens 1 unterscheidet sich von dem in den Figuren 1 und 2 gezeigten Beispiel dadurch, dass die äußere Seitenwand 4.12 der Oberschale 4.1 nur eine einzelne Lasche 4.13 aufweist, mit der sie an einem der buchsen- oder hülsenartigen Distanzelemente 13, 14, vorzugsweise am Distanzelement 13 der Karosserieanbindung, angeschweißt ist.

In diesem Fall ist nur ein zusätzlicher Lastpfad durch die Schweißnaht 18 in Richtung der Längsmittelachse des betreffenden Distanzelements 13 implementiert, wohingegen bei dem in den Fig. 1 und 2 gezeigten Ausführungsbeispiel zwei zusätzliche Lastpfade durch die Schweißnähte 18, 19 in Richtung der Längsmittelachsen der Distanzelemente 13, 14 implementiert sind.

Die Ausführung der Erfindung ist nicht auf die in der Zeichnung dargestellten Beispiele beschränkt. Vielmehr umfasst die Erfindung weitere Ausführungsvarianten, die auch bei einer von den gezeigten Beispielen abweichenden Gestaltung von der in den beigefügten Ansprüchen angegebenen Erfindung Gebrauch machen. Beispielsweise ist es ebenfalls möglich, dass sowohl die Oberschale als auch die Unterschale jeweils eine Seitenwand als Außenwand des Hilfsrahmens aufweisen, wobei die Seitenwand der Oberschale mit der Unterschale und die Seitenwand der Unterschale mit der Oberschale verschweißt sind. In diesem Zusammenhang ist es weiter möglich, dass beide Seitenwände eine Lasche aufweisen können, wobei beide Laschen mit einem, insbesondere mit demselben, Distanzelement verschweißt werden können.

## Patentansprüche

1. Hilfsrahmen (1), insbesondere Vorderachs-Hilfsrahmen, für ein Fahrzeug, insbesondere Elektrofahrzeug,
mit einem ersten Schalenelement (4.1) und einem zweiten Schalenelement (5), das mit dem ersten Schalenelement (4.1) starr verbunden ist und mit demselben einen Hohlraum (12) definiert, wobei mindestens eines der Schalenelemente (4.1) eine Seitenwand (4.12) aufweist, die als Außenwand des Hilfsrahmens mit dem anderen Schalenelement (5) oder einem anderen der Schalenelemente (5) stoffschlüssig verbunden ist,
mit mindestens einem buchsen- oder hülsenartigen Distanzelement (13, 14) zum Durchstecken eines Befestigungsbolzens, vorzugsweise Schraubbolzens, zur Karosserie- oder Bauteilanbindung,
wobei das Distanzelement (13, 14) an einem seiner Enden an einem Durchgangsloch des ersten Schalenelements (4.1) angeordnet ist und sich innerhalb des Hohlraums (12) in Richtung eines Durchgangslochs des zweiten Schalenelements (5) erstreckt, **dadurch gekennzeichnet, dass** die Seitenwand (4.12) des Schalenelements (4.1) mindestens eine Lasche (4.13, 4.14) aufweist, die mit dem Distanzelement (13, 14) verschweißt ist.

2. Hilfsrahmen nach Anspruch 1, **dadurch gekennzeichnet, dass** das die Lasche aufweisende Schalenelement (4.1) eine Oberschale des Hilfsrahmens (1) ist.

3. Hilfsrahmen nach Anspruch 1 oder 2, **dadurch gekennzeichnet, dass** das die Lasche (4.13, 4.14) aufweisende Schalenelement (4.1) eine weitere Seitenwand (4.15) aufweist, die über einen Steg (4.16) mit der die Lasche (4.13, 4.14) aufweisenden Seitenwand (4.12) einstückig verbunden ist, wobei die beiden Seitenwände (4.12, 4.15) mit dem Steg (4.16) einen im Querschnitt U-förmigen Schalenabschnitt definieren.

4. Hilfsrahmen nach Anspruch 3, **dadurch gekennzeichnet, dass** der die Seitenwände miteinander verbindende Steg (4.16) des Schalenelements (4.1) eine fensterartige Aussparung (4.17) aufweist, wobei die Aussparung (4.17) eine lichte Größe aufweist, die größer ist als die Außenseitenfläche der Lasche (4.13, 4.14), und wobei vorzugsweise die lichte Größe der Aussparung (4.17) mindestens das 1,5-fache, besonders bevorzugt mindestens das 2-fache der Außenseitenfläche der Lasche (4.13, 4.14) beträgt.

5. Hilfsrahmen nach einem der Ansprüche 1 bis 4, **dadurch gekennzeichnet, dass** der Hilfsrahmen (1) mindestens zwei buchsen- oder hülsenartige Distanzelemente (13, 14) aufweist, wobei eines der Distanzelemente (13) zum Durchstecken eines Befestigungsbolzens, vorzugsweise Schraubbolzens, zur Karosserieanbindung bestimmt ist, während ein anderes der Distanzelemente (14) zum Durchstecken eines Befestigungsbolzens, vorzugsweise Schraubbolzens, zur Bauteilanbindung bestimmt ist, und wobei die Seitenwand (4.12) des Schalenelements (4.1) mindestens zwei Laschen (4.13, 4.14) aufweist, von denen eine Lasche (4.13) mit dem Distanzelement (13) der Karosserieanbindung und eine andere der Laschen (4.14) mit dem Distanzelement (14) der Bauteilanbindung verschweißt sind.

6. Hilfsrahmen nach einem der Ansprüche 1 bis 5, **dadurch gekennzeichnet, dass** die jeweilige Lasche (4.13, 4.14) durch eine im Wesentlichen parallel zu einer Längsmittelachse des buchsen- oder hülsenartigen Distanzelements (13, 14) verlaufende Schweißnaht (18, 19), vorzugsweise Kehlnaht, mit dem betreffenden Distanzelement (13, 14) verschweißt ist, wobei die Längsmittelachse des Distanzelements (13, 14) im montierten Zustand des Hilfsrahmens (1) vorzugsweise im Wesentlichen parallel zur Hochachse (z) des Hilfsrahmens (1) verläuft.

7. Hilfsrahmen nach einem der Ansprüche 1 bis 6, **dadurch gekennzeichnet, dass** sich die Schweißverbindung (18, 19) zwischen der Lasche (4.13, 4.14) und dem Distanzelement (13, 14) über eine axiale Länge des Distanzelements (13, 14) erstreckt, die im Bereich von 20 bis 95%, vorzugsweise im Bereich von 50 bis 95%, besonders bevorzugt im Bereich von 60 bis 90% des am Distanzelement (13, 14) gemessenen Abstandes (A) der Schalenelemente (4.1, 5) voneinander liegt.

8. Hilfsrahmen nach einem der Ansprüche 1 bis 7, **dadurch gekennzeichnet, dass** das Distanzelement (13, 14) und die daran angeschweißte Lasche (4.13, 4.14) zueinander im Schrägstoß angeordnet sind.

9. Hilfsrahmen nach einem der Ansprüche 1 bis 8, **dadurch gekennzeichnet, dass** das mindestens eine Distanzelement (13, 14) durch eine Steckverbindung oder Klemmverbindung und/oder durch eine endseitige oder stirnseitige Schweißverbindung (16, 17) mit mindestens einem der Schalenelemente (4.1, 5) verbunden ist.

10. Hilfsrahmen nach einem der Ansprüche 1 bis 9, **dadurch gekennzeichnet, dass** die oder die jeweilige Lasche (4.13, 4.14) einstückig mit der Seitenwand (4.12) des Schalenelements (4.1) ausgebildet ist.

11. Hilfsrahmen nach einem der Ansprüche 1 bis 10, **dadurch gekennzeichnet, dass** die oder die jeweilige Lasche (4.13, 4.14) relativ zu einer von der Seitenwand (4.12) definierten Außenfläche oder Tangentialebene einwärts in Richtung des mit ihm verschweißten Distanzelements (13, 14) gebogen ist.

12. Hilfsrahmen nach einem der Ansprüche 1 bis 11, **dadurch gekennzeichnet, dass** die Lasche (4.13, 4.14) über einen Biegebereich in die Seitenwand (4.12) übergeht, wobei in der Seitenwand (4.12) und/oder an der Lasche (4.13, 4.14) mindestens ein Freischnitt (4.18, 4.19) vorhanden ist, der sich über den Biegebereich hinaus in die Seitenwand (4.12) erstreckt.

13. Hilfsrahmen nach einem der Ansprüche 1 bis 12, **dadurch gekennzeichnet, dass** zwischen der Lasche (4.13, 4.14) des einen Schalenelements (4.1) und dem anderen Schalenelement (5) eine Aussparung (20, 21) ausgebildet ist, die sich bis zu dem mit dem Distanzelement (13, 14) verschweißten Ende der Lasche (4.13, 4.14) erstreckt, wobei sich die Aussparung (21) vorzugsweise ausgehend von dem mit dem Distanzelement (14) verschweißten Ende der Lasche (4.14) bis zum Biegebereich der Lasche (4.14) oder über den Biegebereich der Lasche (4.14) hinaus in die Seitenwand (4.12) erstreckt.

14. Hilfsrahmen nach einem der Ansprüche 1 bis 13, **dadurch gekennzeichnet, dass** das Distanzelement (13, 14) einen durchmessererweiterten Kopf (13.1, 14.1) in Form einer Lochscheibe, vorzugsweise Zahnscheibe, aufweist, wobei der Kopf (13.1, 14.1) mit dem Distanzelement (13, 14) einstückig ausgebildet ist.

15. Hilfsrahmen nach einem der Ansprüche 1 bis 14, **dadurch gekennzeichnet, dass** die Schalenelemente (2.1, 2.1', 3.1, 4.1, 4.1', 5) aus Blech, vorzugsweise aus Stahlblech, hergestellt sind.

## Claims

1. Subframe (1), in particular a front-axle subframe, for a vehicle, in particular an electric vehicle, comprising:
a first shell element (4.1) and a second shell element (5), which is rigidly connected to the first shell element (4.1) and, together with the first shell element (4.1), defines a cavity (12), wherein at least one of the shell elements (4.1) has a side wall (4.12) which, as an outer wall of the subframe, is materially bonded to the other shell element (5) or to another one of the shell elements (5); at least one bushing- or sleeve-like spacer element (13, 14) for receiving a fastening bolt, preferably a screw bolt, for attachment to the vehicle body or to a component;
wherein the spacer element (13, 14) is arranged at one of its ends at a through-hole of the first shell element (4.1) and extends within the cavity (12) toward a through-hole of the second shell element (5),
**characterized in that** the side wall (4.12) of the shell element (4.1) has at least one tab (4.13, 4.14) that is welded to the spacer element (13, 14).

2. Subframe according to claim 1, **characterized in that** the shell element (4.1) having the tab is an upper shell of the subframe (1).

3. Subframe according to claim 1 or 2, **characterized in that** the shell element (4.1) having the tab (4.13, 4.14) has a further side wall (4.15), which is integrally connected via a web (4.16) to the side wall (4.12) having the tab (4.13, 4.14), wherein the two side walls (4.12, 4.15), together with the web (4.16), define a shell section having a U-shaped cross-section.

4. Subframe according to claim 3, **characterized in that** the web (4.16) of the shell element (4.1), which connects the side walls to one another, has a window-like recess (4.17), wherein the recess (4.17) has a clear size that is larger than the outer side surface area of the tab (4.13, 4.14), and wherein, preferably, the clear size of the recess (4.17) is at least 1.5 times, and more preferably at least 2 times, as large as the outer side surface area of the tab (4.13, 4.14).

5. Subframe according to any one of claims 1 to 4, **characterized in that** the subframe (1) comprises at least two bushing- or sleeve-like spacer elements (13, 14), wherein one of the spacer elements (13) is intended to receive a fastening bolt, preferably a screw bolt, for attachment to the vehicle body, while another one of the spacer elements (14) is intended to receive a fastening bolt, preferably a screw bolt, for attachment to a component, and wherein the side wall (4.12) of the shell element (4.1) comprises at least two tabs (4.13, 4.14), one tab (4.13) being welded to the spacer element (13) for attachment to the vehicle body and another one of the tabs (4.14) being welded to the spacer element (14) for attachment to the component.

6. Subframe according to any one of claims 1 to 5, **characterized in that** the respective tab (4.13, 4.14) is welded to the respective bushing- or sleeve-like spacer element (13, 14) by means of a weld seam (18, 19), preferably a fillet weld, extending substantially parallel to a longitudinal center axis of the spacer element (13, 14), wherein, when the subframe (1) is in the installed state, the longitudinal center axis of the spacer element (13, 14) preferably extends substantially parallel to the vertical axis (z) of the subframe (1).

7. Subframe according to any one of claims 1 to 6, **characterized in that** the welded joint (18, 19) between the tab (4.13, 4.14) and the spacer element (13, 14) extends over an axial length of the spacer element (13, 14) which is in the range of 20 to 95%, preferably in the range of 50 to 95%, and most preferably in the range of 60 to 90%, of the distance (A) between the shell elements (4.1, 5), measured at the spacer element (13, 14).

8. Subframe according to any one of claims 1 to 7, **characterized in that** the spacer element (13, 14) and the tab (4.13, 4.14) welded thereto are arranged relative to one another so as to form an oblique joint.

9. Subframe according to any one of claims 1 to 8, **characterized in that** the at least one spacer element (13, 14) is connected to at least one of the shell elements (4.1, 5) by means of a plug-in connection or a clamping connection and/or by means of an end-side or end-face welded joint (16, 17).

10. Subframe according to any one of claims 1 to 9, **characterized in that** the tab or the respective tab (4.13, 4.14) is formed integrally with the side wall (4.12) of the shell element (4.1).

11. Subframe according to any one of claims 1 to 10, **characterized in that** the tab or the respective tab (4.13, 4.14) is bent inward, relative to an outer surface or tangential plane defined by the side wall (4.12), toward the spacer element (13, 14) to which the tab is welded.

12. Subframe according to any one of claims 1 to 11, **characterized in that** the tab (4.13, 4.14) transitions into the side wall (4.12) via a bending region, wherein at least one relief cut (4.18, 4.19) is provided in the side wall (4.12) and/or at the tab (4.13, 4.14), said relief cut extending beyond the bending region into the side wall (4.12).

13. Subframe according to any one of claims 1 to 12, **characterized in that** a recess (20, 21) is formed between the tab (4.13, 4.14) of one shell element (4.1) and the other shell element (5), said recess extending up to the end of the tab (4.13, 4.14) welded to the spacer element (13, 14), wherein the recess (21) preferably extends from the end of the tab (4.14) welded to the spacer element (14) to the bending region of the tab (4.14) or beyond the bending region of the tab (4.14) into the side wall (4.12).

14. Subframe according to any one of claims 1 to 13, **characterized in that** the spacer element (13, 14) has an enlarged-diameter head (13.1, 14.1) in the form of a perforated disk, preferably a toothed disk, wherein the head (13.1, 14.1) is formed integrally with the spacer element (13, 14).

15. Subframe according to any one of claims 1 to 14, **characterized in that** the shell elements (2.1, 2.1', 3.1, 4.1, 4.1', 5) are made of sheet metal, preferably sheet steel.

## Revendications

1. Châssis auxiliaire (1), en particulier châssis auxiliaire d'essieu avant, pour un véhicule,
en particulier un véhicule électrique, comprenant un premier élément de coque (4.1) et un deuxième élément de coque (5), qui est relié de manière rigide au premier élément de coque (4.1) et définit avec celui-ci une cavité (12), au moins l'un des éléments de coque (4.1) comportant une paroi latérale (4.12) qui, en tant que paroi extérieure du châssis auxiliaire, est reliée à l'autre élément de coque (5) ou à un autre des éléments de coque (5),
comportant au moins un élément d'écartement (13, 14) en forme de douille ou de manchon destiné à le passage d'un boulon de fixation, de préférence un boulon fileté, pour la liaison à la carrosserie ou à un composant,
l'élément d'écartement (13, 14) étant disposé, à l'une de ses extrémités, au niveau d'un trou traversant du premier élément de coque (4.1) et s'étend à l'intérieur de la cavité (12) en direction d'un trou traversant du deuxième élément de coque (5), **caractérisé en ce que** la paroi latérale (4.12) de l'élément de coque (4.1) comporte au moins une languette (4.13, 4.14) qui est soudée à l'élément d'écartement (13, 14).

2. Châssis auxiliaire selon la revendication 1, **caractérisé en ce que** l'élément de coque (4.1) comportant la languette est une coque supérieure du châssis auxiliaire (1).

3. Châssis auxiliaire selon la revendication 1 ou 2, **caractérisé en ce que** l'élément de coque (4.1) comportant la languette (4.13, 4.14) comporte une autre paroi latérale (4.15) qui est reliée d'un seul tenant, par l'intermédiaire d'une nervure (4.16), à la paroi latérale (4.12) comportant la languette (4.13, 4.14) par l'intermédiaire d'une nervure (4.16), les deux parois latérales (4.12, 4.15) définissant avec la nervure (4.16) une section de coque de section transversale en forme de U.

4. Châssis auxiliaire selon la revendication 3, **caractérisé en ce que** la nervure (4.16) de l'élément de coque (4.1), qui relie les parois latérales entre elles, présente un évidement en forme de fenêtre (4.17), l'évidement (4.17) ayant une dimension intérieure supérieure à la surface latérale extérieure de la languette (4.13, 4.14), et dans lequel, de préférence, la dimension intérieure de l'évidement (4.17) est au moins 1,5 fois, et de manière particulièrement préférée au moins 2 fois, la surface latérale extérieure de la languette (4.13, 4.14).

5. Châssis auxiliaire selon l'une des revendications 1 à 4, **caractérisé en ce que** le châssis auxiliaire (1) comporte au moins deux éléments d'écartement (13, 14) en forme de douille ou de manchon, l'un des éléments d'écartement (13) étant destiné à l'insertion d'un boulon de fixation, de préférence d'un boulon fileté, destiné à la la fixation à la carrosserie, tandis qu'un autre des éléments d'écartement (14) est destiné au passage d'un boulon de fixation, de préférence un boulon fileté, pour la fixation au composant, et la paroi latérale (4.12) de l'élément de coque (4.1) comportant au moins deux languettes (4.13, 4.14), dont une languette (4.13) est soudée à l'élément d'écartement (13) de la fixation à la carrosserie et une autre des languettes (4.14) est soudée à l'élément d'écartement (14) de la fixation du composant.

6. Châssis auxiliaire selon l'une des revendications 1 à 5, **caractérisé en ce que** la languette respective (4.13, 4.14) est reliée par un joint de soudure (18, 19), s'étendant essentiellement parallèlement à un axe longitudinal de l'élément d'écartement (13, 14) en forme de douille ou de manchon, de préférence un cordon de soudure en angle, est soudée à l'élément d'écartement concerné (13, 14), l'axe médian longitudinal de l'élément d'écartement (13, 14) s'étend, à l'état monté du châssis auxiliaire (1), de préférence sensiblement parallèlement à l'axe vertical (z) du châssis auxiliaire (1) .

7. Châssis auxiliaire selon l'une des revendications 1 à 6, **caractérisé en ce que** le joint de soudure (18, 19) entre la languette (4.13, 4.14) et l'élément d'écartement (13, 14) s'étend sur une longueur axiale de l'élément d'écartement (13, 14) , qui se situe dans une plage comprise entre 20 et 95 %, de préférence entre 50 et 95 %, et de préférence encore dans la plage de 60 à 90 % de la distance (A) entre les éléments de coque (4.1, 5) mesurée au niveau de l'élément d'écartement (13, 14).

8. Châssis auxiliaire selon l'une des revendications 1 à 7, **caractérisé en ce que** l'élément d'écartement (13, 14) et la languette (4.13, 4.14) soudée à celui-ci sont disposés l'un par rapport à l'autre en about oblique.

9. Châssis auxiliaire selon l'une des revendications 1 à 8, **caractérisé en ce que** le ou les éléments d'écartement (13, 14) sont reliés à au moins l'un des éléments de coque (4.1, 5) par un assemblage par emboîtement ou par un assemblage par serrage et/ou par un joint de soudure aux extrémités ou sur la face frontale (16, 17) avec au moins l'un des éléments de coque (4.1, 5).

10. Châssis auxiliaire selon l'une des revendications 1 à 9, **caractérisé en ce que** la languette ou la languette correspondante (4.13, 4.14) est formée d'un seul tenant avec la paroi latérale (4.12) de l'élément de coque (4.1).

11. Châssis auxiliaire selon l'une des revendications 1 à 10, **caractérisé en ce que** la languette ou la languette correspondante (4.13, 4.14) est courbée vers l'intérieur, par rapport à une surface extérieure ou à un plan tangentiel défini par la paroi latérale (4.12), en direction de l'élément d'écartement (13, 14) auquel elle est soudée.

12. Châssis auxiliaire selon l'une des revendications 1 à 11, **caractérisé en ce que** la languette (4.13, 4.14) se prolonge dans la paroi latérale (4.12) par l'intermédiaire d'une zone de pliage, au moins une découpe (4.18, 4.19) étant prévue dans la paroi latérale (4.12) et/ou sur la languette (4.13, 4.14) qui s'étend au-delà de la zone de pliage dans la paroi latérale (4.12).

13. Châssis auxiliaire selon l'une des revendications 1 à 12, **caractérisé en ce que** entre la languette (4.13, 4.14) de l'un des éléments de coque (4.1) et l' autre élément de coque (5) est formé un évidement (20, 21) qui s'étend jusqu'à l'extrémité de la languette (4.13, 4.14) soudée à l'élément d'écartement (13, 14), l'évidement (21) s'étendant de préférence depuis l'extrémité de la languette (4.14) soudée à l'élément d'écartement (14) jusqu'à la zone de pliage de la languette (4.14) ou au-delà de la zone de pliage de la languette (4.14) dans la paroi latérale (4.12).

14. Châssis auxiliaire selon l'une des revendications 1 à 13, **caractérisé en ce que** l'élément d'écartement (13, 14) présente une tête de diamètre élargi (13.1, 14.1) sous la forme d'un disque perforé, de préférence d'un disque denté, la tête (13.1, 14.1) est réalisée d'un seul tenant avec l'élément d'écartement (13, 14).

15. Châssis auxiliaire selon l'une des revendications 1 à 14, **caractérisé en ce que** les éléments de coque (2.1, 2.1', 3.1, 4.1, 4.1', 5) sont réalisés en tôle, de préférence en tôle d'acier.
